Europäisches Patentamt

European Patent Office

Office européen des brevets

(19)

(11) Publication number: **0 192 333**

A1

# EUROPEAN PATENT APPLICATION

(12)

(21) Application number: 86300329.9

(22) Date of filing: 17.01.86

(51) Int. Cl.⁴: **H 05 B 6/12**

(30) Priority: 18.01.85 US 692731

(43) Date of publication of application:
27.08.86 Bulletin 86/35

(84) Designated Contracting States:
BE CH DE FR GB IT LI SE

(71) Applicant: CLAD METALS, INC.

Canonsburg Pennsylvania 15317(US)

(72) Inventor: Ulam, John Bernard
134 Mt. Blaine Drive
McMurray Pennsylvania 15317(US)

(74) Representative: Cross, Rupert Edward Blount et al,
BOULT, WADE & TENNANT 27 Furnival Street
London EC4A 1PQ(GB)

(54) Induction heating vessels.

(57) An induction heating vessel such as a cooking utensil for use with an induction cooker has a wall formed by a first layer including a magnetic metal (20) which is capable of being inductively heated, and a second layer which includes a ply of aluminium (31, 32) and/or a ply of copper (30), this second layer being in intimate thermally conducting contact with the first layer and being located interiorly of the utensil with respect of the first layer.

The first layer may comprise a ply (20) of carbon sheet located between two plies (22) of stainless steel.

To deter corrosion of the carbon steel (20) at the edge of the vessel, the circumferential edge of the utensil can be covered by a stainless steel ring (54) which encloses a metal (31') which, in the galvanic series, is sacrificial with respect to the carbon steel (20).

FIG.1

FIG.2

FIG.7

- 1 -  0192333

<u>INDUCTION HEATING VESSELS</u>

This invention relates to induction heating vessels, that is vessels which are capable of being inductively heated when placed in an oscillating magnetic field, and particularly such vessels in the form of cooking utensils.

The principles of induction heating are well known and are described in, for example, US-A-3966426 and US-A-4354082.

According to this invention there is provided an induction heating vessel, characterised in that the wall thereof is formed of a plurality of layers of metal, each layer being formed of one or more plies of metal, the layers being in intimate thermally-conducting contact with each other, there being a first layer having at least a portion thereof formed of a magnetic material capable of being inductively heated by placement in an oscillating magnetic field, and a second layer located interiorly of the vessel with respect to the first layer, the second layer having a higher thermal conductivity than the first layer and including a ply of copper and/or a ply of aluminium.

This invention provides vessels which are durable, attractive, possess good thermal conductivity through their thicknesses, and also have good lateral heat transmission in order to avoid or reduce the presence of hot spots in the vessels.

In vessels having a ply of carbon steel there is a tendency toward corrosion of the carbon steel when exposed at the edge of the vessel.

Also according to this invention there is provided an induction heating vessel having a wall comprising a ply of carbon steel and having an edge to which the ply of carbon steel extends, characterised by a stainless steel ring covering said edge around the circumference of the vessel, said stainless steel ring enclosing a metal which in the galvanic series is sacrificial with respect to the carbon steel, the sacrificial metal being in electrical contact with the carbon steel ply to deter corrosion at said edge.

This invention will now be described by way of example with reference to the drawings, in which:-

Fig. 1 is a sectional side view of a vessel according to the invention;

Fig. 2 is a sectional view showing the wall of a vessel according to a first embodiment of the invention;

Fig. 3 is a sectional view showing the wall of a vessel according to a second embodiment of the invention;

Fig. 4 is a sectional view showing the wall of a vessel according to a third embodiment of the invention;

Fig. 5 is a sectional view showing the wall of a vessel according to a fourth embodiment of the invention;

Fig. 6 is a sectional view showing the wall of a vessel according to a fifth embodiment of the invention;

Fig. 7 is a sectional view showing the edge of a vessel according to the invention, and provided with a ring which deters corrosion at the edge of the vessel; and

Figs. 8 and 9 are sectional views showing two arrangements whereby corrosion of carbon steel at the edge of a vessel can be deterred by locating a sacrificial metal between a perimetral ring and the edge of the vessel.

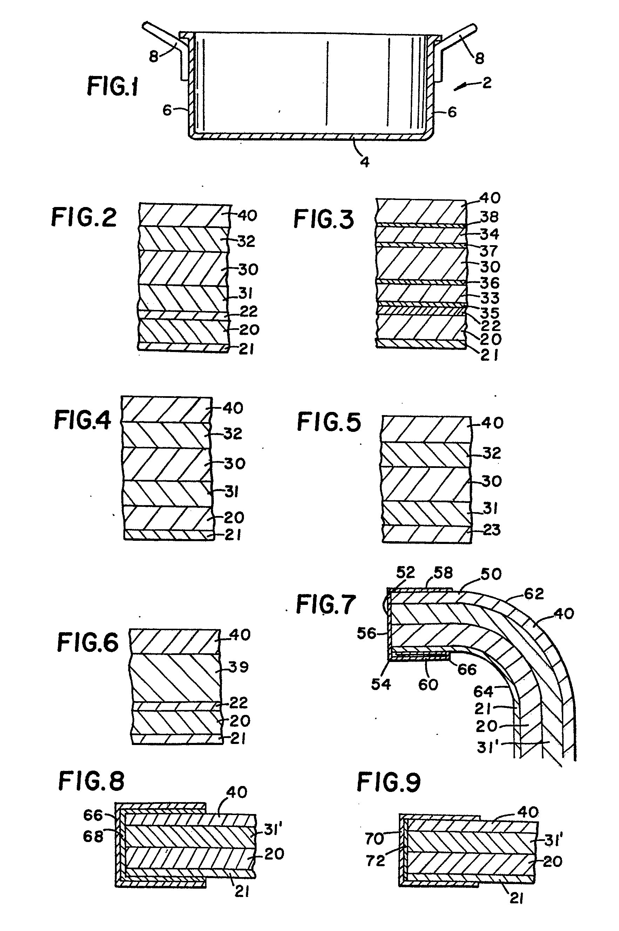

Fig. 1 is a sectional view of a vessel in the form of a cooking utensil 2 according to this invention. The utensil has a bottom wall 4, upstanding side walls 6, and handles 8, and is formed from a single blank of metal which has a plurality of plies roll bonded together using known techniques. The utensil may otherwise be formed by drawing, hydroforming, or by other processes known in the art. The vessel may take various forms, including the illustrated pot, a skillet, a pan, a griddle or other item.

For convenience of identification plies in a first outer inductively-heatable layer of the utensil have reference numerals starting with the number "2", and plies in a second, inner layer with a higher thermal conductivity have reference numerals starting with the number "3".

The utensil wall shown in Fig. 2 has a first, outer layer formed of a ply 20 of carbon steel clad on its opposite sides with plies 21 and 22 of nonmagnetic stainless steel. The carbon steel may be 1005 to 1010 steel, and the stainless steel may be in the 200 or 300 series. A principal heat conducting second, inner layer has a copper ply 30 located between two plies 31 and 32 of aluminium. Additionally, there is an interior third layer 40 of stainless steel.

With respect to the thickness of the plies in Fig. 2, each ply 21 and 22 has a thickness which is about ten to twenty percent of the total thickness of plies 20, 21 and 22, this total thickness being about 0.38 to 1.27 mm (0.015 to 0.05 inch). The plies 30, 31 and 32 have a total thickness of about 0.5 to 2.0 mm (0.02 to 0.08 inch) of which about 0.25 to 0.75 mm (0.01 to 0.03 inch) is formed of the copper core ply 30, and the balance of which is equally occupied by the aluminium cladding plies 31 and 32. The interior stainless steel ply 40 has a thickness of about 0.127 to 0.635 mm (0.005 to 0.025 inch).

In Fig. 3, the plies 20, 21, 22, 30 and 40 are essentially the same as in Fig. 2; however, the aluminium plies are somewhat different. Rather than having a uniform composition throughout their thickness as in Fig. 2, the aluminium plies in Fig. 3 each have an aluminium alloy core 33 or 34 which is clad on its opposite sides with pure aluminium as shown at 35, 36, 37 and 38. A clad aluminum material of this type is commercially available and is sold under the trademark ALCLAD by Aluminum Company of America, Pittsburgh, Pennsylvania.

The wall structure shown in Fig. 4 is identical to that shown in Fig. 2, except that the stainless steel ply 22 has been omitted.

Referring to Fig. 5, the outermost layer is formed of a single ply 23 of a ferromagnetic stainless steel. Materials of this nature are well known, and a preferred form thereof is 430 stainless steel. The plies 30, 31, 32 and 40 in Fig. 5 correspond to the similarly referenced plies in Figs. 2 and 4.

In the embodiment of Fig. 6, the outer and inner layers of the cooking utensil are identical to the corresponding layers shown in Figs. 2 and 3, the plies of these layers being identified by the reference numerals 20, 21, 22 and 40. However, in Fig. 5, the second, thermally conductive layer is formed of a single ply 39 of copper which has a thickness of about 0.38 to 1.27 mm (0.015 to 0.050 inch).

A potential problem in vessels which have one or more plies of carbon steel is that of corrosion at the exposed edges of the metal. Known carbon steel vessels are protected from corrosion by coatings of enamel or a stainless steel edge ring.

Fig. 7 shows an arrangement with which corrosion is detered. The wall of the vessel has an outer ply 21 of stainless steel or copper, a ply 20 of carbon steel, a ply 31' of aluminium or copper, and an inner ply 40 of stainless steel. The wall can otherwise have a structure as shown in any one of Figs. 2 to 6.

The upper portion of the vessel wall in Fig. 7 is turned outwardly to form an annular flange 50 with an edge 52 to which all four plies 20, 21, 31' and 40 extend. A stainless steel edge ring 54 is located about the edge, the ring 54 having a U-shaped cross section formed by a base 56 which overlies the edge 52 and a pair of flanges 58 and 60 which respectively overlie the interior surface 62 and the exterior surface 64 of the vessel. The flange 58 is formed of a single thickness of stainless steel, and the lower flange 60 is bent inwardly upon itself at 66 to form a double thickness of stainless steel. A single thickness flange 60 is also possible. In most instances, the ring 54 will be circular to correspond to the circular perimeter of a conventional cooking vessel, and the ring 54 will initially have a radial split which permits its placement in position. After the ring 54 has been placed on the vessel, the ends thereof will be welded together to hold the ring to the vessel in the position shown in Fig. 7.

The ring 54 encloses the edge of the vessel wall to deter corrosion. When the ply 31' is aluminium, the ring 54 causes galvanic current between the ply 31' and the carbon steel ply 20 to remain within the confines of the ring 54. Aluminium is higher in the galvanic series than carbon steel so, in vessel walls where the aluminium is in contact with the carbon steel, the presence of the ring 54 will cause the aluminium to act as a sacrificial material which deters corrosion of the carbon steel at the edge of the vessel wall.

Figs. 8 and 9 show other forms of edge rings which can be used to deter corrosion of the carbon steel in the utensil wall.

In Fig. 8, the ring 66 has an interior layer 68 of a material which is sacrificial in the galvanic series with respect to the carbon steel. The layer 68 may be aluminium, in which event the ring 66 may be formed of commercially available stainless steel clad aluminium. The layer 68 may otherwise be zinc or tin, applied to the stainless steel ring 66 by any of the known commercial coating processes for these metals.

Fig. 9 shows a ring 70 which holds a sacrificial metal 72 in electrical contact with the edge of the vessel wall. The metal 72 may be tin, zinc or aluminium, applied by dipping the vessel edge in a bath of the molten sacrificial metal before the stainless steel ring 70 is applied. Alternatively, the metal 72 may be applied mechanically by placing a small wire of the metal inside the ring 70, and then flattening the wire when rolling the ring 70 around the perimeter of the vessel.

CLAIMS

1.    An induction heating vessel (2), characterised in that the wall (6) thereof is formed of a plurality of layers of metal, each layer being formed of one or more plies of metal, the layers being in intimate thermally-conducting contact with each other, there being a first layer having at least a portion (20) thereof formed of a magnetic material capable of being inductively heated by placement in an oscillating magnetic field, and a second layer located interiorly of the vessel (2) with respect to the first layer, the second layer having a higher thermal conductivity than the first layer and including a ply (30, 39) of copper and/or for a ply (31, 32) of aluminium.

2.    A vessel as claimed in Claim 1, characterised in that the second layer comprises two plies (31 and 32) of aluminium and one ply (30) of copper located between the two plies (31 and 32) of aluminium.

3.    A vessel as claimed in Claim 1 or Claim 2, characterised in that the or each ply (31, 32) of aluminium has a core (33, 34) of aluminium alloy which is clad on its opposite surfaces with pure aluminium (35, 36, 37, 38).

4.    A vessel as claimed in any preceding claim, characterised by a third layer (40) of stainless steel located interiorly of the vessel (2) with respect to the second layer.

5.    A vessel as claimed in any preceding claim, characterised in that the first layer is formed of a single ply (23) magnetic stainless steel.

6.     A vessel as claimed in Claim 5, characterised in that the first layer has a ply (21) of nonmagnetic stainless steel located exteriorly of the vessel (2) with respect to the ply (20) of magnetic stainless steel.

7.     A vessel as claimed in Claim 7, characterised in that the first layer has a second ply (22) of nonmagnetic stainless steel, the ply of magnetic stainless steel being located between the two plies (21, 22) of nonmagnetic stainless steel.

8.     A vessel as claimed in any one of Claims 5 to 7, characterised in that the ply (23) of magnetic stainless steel is of carbon steel.

9.     A vessel as claimed in any preceding claim, in which the wall (6) has an edge (52) extending around the circumference of the vessel (2), characterised by a stainless steel ring (54, 66, 70) covering said edge (52).

10.     A vessel as claimed in Claim 9 when dependent upon Claim 8, characterised in that the stainless steel ring (54, 66, 70) has a U-shaped cross section with a base (56) which overlies said edge (52) and a pair of flanges (58, 60) which overlie the interior and exterior surfaces of the wall (6) of the vessel (2) adjacent to said edge (52), the stainless ring (54, 66, 70) enclosing a metal (31, 68, 72) which in the galvanic series is sacrificial with respect to the carbon steel, the sacrificial metal (31, 68, 72) being in electrical contact with the carbon steel ply (20) to deter corrosion at said edge (52).

- 9 -                    0192333

11.   An induction heating vessel having a wall comprising a ply (20) of carbon steel and having an edge (52) to which the ply (20) of carbon steel extends, characterised by a stainless steel ring (54, 66, 70) covering said edge (52) around the circumference of the vessel, said stainless steel ring (54, 66, 70) enclosing a metal (31, 68, 72) which in the galvanic series is sacrificial with respect to the carbon steel (20), the sacrificial metal (31, 68, 72) being in electrical contact with the carbon steel ply (20) to deter corrosion at said edge (52).

12.   A vessel as claimed in Claim 11, characterised in that the sacrificial metal is a ply (31) of aluminum in the wall of the vessel.

13.   A vessel as claimed in Claim 11, characterised in that the sacrificial metal (68, 72) is located between the stainless steel ring (66, 70) and the edge (52) of the wall of the vessel.

14.   A vessel as claimed in any one of Claims 11 to 13, characterised in that the stainless steel ring (54, 66, 70) has a U-shaped cross section with a base (56) which overlies said edge (52) and a pair of flanges (58, 61) which overlie interior and exterior surfaces of the wall of the vessel adjacent to said edge (52).

0192333

FIG.1

FIG.2

40
32
30
31
22
20
21

FIG.3

40
38
34
37
30
36
33
35
22
20
21

FIG.4

40
32
30
31
20
21

FIG.5

40
32
30
31
23

FIG.6

40
39
22
20
21

FIG.7

52  58  50
62
40
56
54  60  66
64
21
20
31'

FIG.8

66
68
40
31'
20
21

FIG.9

70
72
40
31'
20
21

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 111 867 (ARDAL OG SUNNDAL VERK) <br> * Page 5, line 35 - page 7, line 9 * | 1,2,4-7 | H 05 B 6/12 |
| A | FR-A-2 453 627 (EQUIPINOX) <br> * Page 1, lines 30-38; page 2, line 36 - page 3, line 7 * | 1,2,4-6 | |
| A | FR-A-2 437 184 (ARDAL OG SUNNDAL VERK) <br> * Page 6, lines 6-20; figure 7 * | 1,4,9-12,14 | |
| A | EP-A-0 036 978 (WÜRTTEMBERGISCHE METALLWARENFABRIK) <br> * Page 5, line 36 - page 6, line 11; figures 12,13 * | 1,9-11 | |
| A | DE-A-2 657 699 (BOSCH-SIEMENS) | | **TECHNICAL FIELDS SEARCHED (Int. Cl.4)** <br><br> H 05 B 6/00 <br> A 47 J 27/00 <br> A 47 J 36/00 |
| A | DE-B-1 083 999 (WÜRTTEMBERGISCHE METALLWARENFABRIK) | | |
| A | FR-E- 67 132 (WÜRTTEMBERGISCHE METALLWARENFABRIK) <br><br> --- -/- | | |

The present search report has been drawn up for all claims

| Place of search | Date of completion of the search | Examiner |
|---|---|---|
| THE HAGUE | 23-04-1986 | RAUSCH R.G. |

| Category | Citation of document with indication, where appropriate, of relevant passages | Relevant to claim | CLASSIFICATION OF THE APPLICATION (Int. Cl.4) |
|---|---|---|---|
| A | FR-A-2 075 574 (RACZ) | | |
| | --- | | |
| A | US-A-2 941 289 (CHACE) | | |
| | ----- | | |

**DOCUMENTS CONSIDERED TO BE RELEVANT** — Page 2

TECHNICAL FIELDS SEARCHED (Int. Cl.4)

The present search report has been drawn up for all claims

| Place of search | Date of completion of the search | Examiner |
|---|---|---|
| THE HAGUE | 23-04-1986 | RAUSCH R.G. |